(19) Europäisches Patentamt
European Patent Office
Office européen des brevets

(11) Veröffentlichungsnummer: **0 034 764**
**A1**

(12) **EUROPÄISCHE PATENTANMELDUNG**

(21) Anmeldenummer: **81100974.5**

(22) Anmeldetag: **12.02.81**

(51) Int. Cl.³: **C 08 L 21/00**
C 08 K 5/34

(30) Priorität: **23.02.80 DE 3006803**

(43) Veröffentlichungstag der Anmeldung:
**02.09.81 Patentblatt 81/35**

(84) Benannte Vertragsstaaten:
**BE DE FR GB IT NL**

(71) Anmelder: **BAYER AG**
**Zentralbereich Patente, Marken und Lizenzen**
**D-5090 Leverkusen 1, Bayerwerk(DE)**

(72) Erfinder: **Schubart, Rüdiger, Dr.**
**An der Engelsfuhr 27**
**D-5060 Bergisch-Gladbach 2(DE)**

(72) Erfinder: **Eholzer, Ulrich, Dr.**
**Gerstenkamp 10**
**D-5000 Köln 80(DE)**

(54) **Vulkanisationsbeschleuniger auf Basis von Melaminderivaten, Melaminderivate enthaltende Kautschukmassen sowie ein Verfahren zur Vulkanisation von Kautschuken.**

(57) Vulkanisationsbeschleuniger auf Basis von
a) Melaminderivaten der allgemeinen Formel I

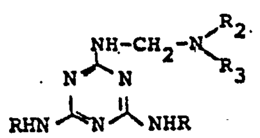

(I)

in der
R Wasserstoff oder den Rest 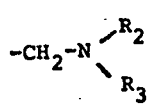

darstellt und
$R_2$ und $R_3$ gleich oder verschieden Wasserstoff, eine geradkettige oder verzweigte $C_1$-$C_4$ Alkyloder Alkenylgruppe, eine $C_3$-$C_7$, bevorzugt $C_5$-$C_6$, Cycloalkylgruppe bedeuten, wobei $R_2$ und $R_3$ auch miteinander über eine $C_2$-$C_{12}$, bevorzugt $C_2$-$C_6$ Alkylenbrücke miteinander verbunden sein können, in der sich auch ein Heteroatom wie Sauerstoff, Schwefel oder N-$C_1$-$C_4$, bevorzugt $C_1$-Alkyl befinden kann,
gegebenenfalls in Kombination mit

b) konventionellen Vulkanisationsbeschleunigern aus der Gruppe der Thiazolbeschleuniger und gegebenenfalls
c) weiteren konventionellen Beschleunigern. Die Melaminverbindungen sind wenig toxisch nicht hautreizend und verfärben Vulkanisate nicht.

EP 0 034 764 A1

BAYER AKTIENGESELLSCHAFT 5090 Leverkusen, Bayerwerk

Zentralbereich
Patente, Marken und Lizenzen E-by-c

Vulkanisationsbeschleuniger auf Basis von Melaminderivaten, Melaminderivate enthaltende Kautschukmassen sowie ein Verfahren zur Vulkanisation von Kautschuken

Die Erfindung betrifft Vulkanisationsbeschleuniger auf Basis von Melaminderivaten, gegebenenfalls in Kombination mit Thiazolbeschleunigern und weiteren konventionellen Beschleunigern, Melaminderivate enthaltende Kautschukmassen sowie ein Verfahren zur Vulkanisation von Kautschuken unter Verwendung der Melaminderivate gegebenenfalls in Kombination mit Thiazolbeschleunigern und weiteren konventionellen Beschleunigern als Vulkanisationsbeschleuniger.

Es ist Stand der Technik, bei der Schwefelvulkanisation von Dien-Kautschuken basische Beschleuniger allein oder vorzugsweise in Kombination mit Thiazolbeschleunigern wie 2-Mercaptobenzthiazol (MBT), 2-Mercapto-benzthiazyldisulfid (MBTS), 2-Benzthiazyl-cyclohexylsulfenamid (CBS) zu verwenden. Als basische Beschleuniger werden beispielsweise in der Praxis verwendet: Diphenylguanidin

(DPG), Di-o-tolylguanidin (DOTG) und Hexamethylentetramin (HEXA) (vgl. hierzu Ullmanns Encyclopädie der technischen Chemie, 4. Auflage, Bd. 13, S. 641 ff.). Weniger effektiv als die genannten Produkte sind einfache Amine wie Dibutylamin u.a.

Bei DPG, DOTG und HEXA bestehen folgende Nachteile: Zur industriellen Herstellung von DPG und DOTG muß als Ausgangsmaterial die extrem toxische Blausäure und als Zwischenstufe das ebenfalls äußerst toxische Chlorcyan verwendet werden (s. hierzu Ullmanns Enz. der techn. Chemie, 4. Auflage, Bd. 12, S. 416 ff.). Hierdurch entstehen erhebliche Probleme, und es sind aufwendige Sicherheitsmaßnahmen zu treffen. DOTG ist relativ toxisch (s. hierzu J.INd.Hyg.a.Tox 13, 87, 1931). HEXA ist stark hautreizend (vgl. hierzu J.Am.Med.Ass. 128, 1209, 1945). DPG, DOTG und HEXA bewirken ferner in hellen bzw. transparenten Mischungen Verfärbungen.

Es wurde nun gefunden, daß Melaminderivate der allgemeinen Formel (I)

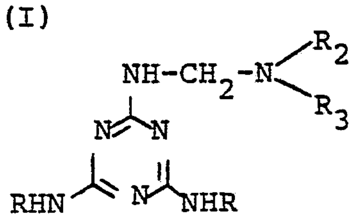

(I)

in der

R Wasserstoff oder den Rest 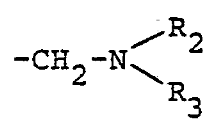 und Gemische darstellt

sich als Vulkanisationsbeschleuniger für die Schwefelvulkanisation von Dien-Kautschuken eignen.

Sie sind frei von den oben genannten Nachteilen. Zu ihrer Herstellung werden weder Blausäure noch Chlorcyan verwendet. Die Verbindungen sind wenig toxisch, nicht hautreizend und können auf einfache Weise aus Melamin, Formaldehyd und entsprechenden Aminen hergestellt werden. Sie verfärben die Vulkanisate nicht.

Die Erfindung betrifft somit Vulkanisationsbeschleuniger auf Basis von Melaminderivaten der allgemeinen Formel I

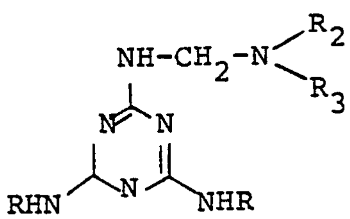

(I)

in der

R Wasserstoff oder den Rest 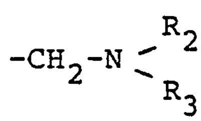 darstellt und

$R_2$ und $R_3$ gleich oder verschieden Wasserstoff, eine geradkettige oder verzweigte $C_1$-$C_4$-Alkyl- oder Alkenylgruppe, eine $C_3$-$C_7$, bevorzugt $C_5$-$C_6$, Cycloalkylgruppe bedeuten, wobei $R_2$ und $R_3$ auch miteinander über eine $C_2$-$C_{12}$, bevorzugt $C_2$-$C_6$ Alkylenbrücke miteinander verbunden sein können, in der sich durch ein Heteroatom wie Sauerstoff, Schwefel oder N-$C_1$-$C_4$, bevorzugt $C_1$, Alkyl befinden kann,

gegebenenfalls in Kombination mit konventionellen Vulkanisationsbeschleunigern aus der Gruppe der Thiazolbeschleuniger und gegebenenfalls weiteren konventionellen Beschleunigern.

Im Falle von R gleich Wasserstoff oder 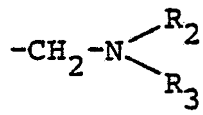 sind folgende Verbindungsklassen denkbar:

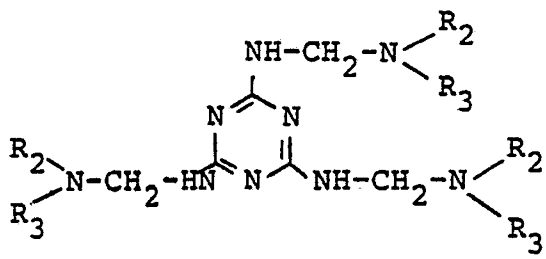

(II)

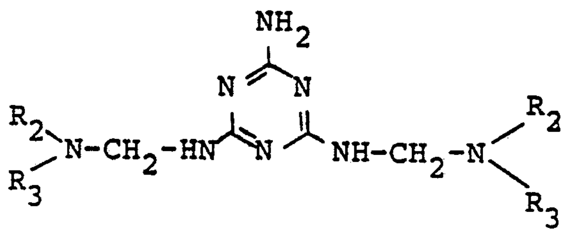

(III)

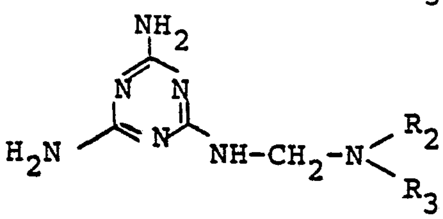

(IV)

Bevorzugt stellt R den Rest 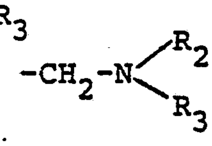 dar.

Für $R_2$ und $R_3$ seien bevorzugt folgende Reste aufgeführt: Methyl, Ethyl, n-Propyl, iso-Propyl, n-Butyl, iso-Butyl, sec-Butyl, tert-Butyl, Propenyl und Butenyl, eine Tetramethylen-, Pentamethylen-, Hexamethylen-, Oxadiethylen-,

Thiadiethylen- und eine N-Alkylazadiethylenbrücke, wobei als N-Alkyl Methyl, Ethyl, Propyl oder n-Butyl in Betracht kommt.

Beispielhaft seien folgende Verbindungen genannt:

Tris-(dimethylamino-methylen)-melamin
Tris-(diethylamino-methylen)-melamin
Tris-(di-n-propylamino-methylen)-melamin
Tris-(di-iso-propylamino-methylen)-melamin
Tris-(di-n-butylamino-methylen)-melamin
Tris-(di-iso-butylamino-methylen)-melamin
Tris-(di-sec-butylamino-methylen)-melamin
Tris-(di-tert-butylamino-methylen)-melamin
Tris-(methyl-cyclohexylamino-methylen)-melamin
Tris-(ethyl-cyclohexylamino-methylen)-melamin
Tris-(n-propyl-cyclohexylamino-methylen)-melamin
Tris-(methyl-allylamino-methylen)-melamin
Tris-(ethyl-allylamino-methylen)-melamin
Tris-(di-allylamino-methylen)-melamin
Tris-(n-butylamino-methylen)-melamin
Tris-(tert-butylamino-methylen)-melamin
Tris-(di-n-butylenamino-methylen)-melamin
Tris-(di-cyclohexylamino-methylen)-melamin
Tris-(di-cyclopentylamino-methylen)-melamin
Tris-(di-cycloheptylamino-methylen)-melamin
Tris-(methyl-isopropylamino-methylen)-melamin
Tris-(ethyl-isopropylamino-methylen)-melamin
Tris-(methyl-tert-butylamino-methylen)-melamin
Tris-(ethyl-tert-butylamino-methylen)-melamin

Tris-(methyl-cyclohexenylamino-methylen)-melamin
Tris-(cyclohexenylamino-methylen)-melamin
Tris-(pyrrolidino-methylen)-melamin
Tris-(piperidino-methylen)-melamin
Tris-(Hexamethylenimino-methylen)-melamin
Tris-(oxadiethylenimino-methylen)-melamin
Tris-(thiadiethylenimino-methylen)-melamin
Tris-(N-Methyldiethylenimino-methylen)-melamin
Tris-(cyclohexylamino-methylen)-melamin
Di-(methyl-cyclohexylamino-methylen)-melamin
Di-(cyclohexylamino-methylen)-melamin
Di-(tert-butylamino-methylen)-melamin
Dicyclohexylamino-methylen-melamin
Di-(diethylamino-methylen)-melamin
Di-(dimethylamino-methylen)-melamin

Selbstverständlich können auch Mischungen der Melaminderivate eingesetzt werden.

Bevorzugt seien genannt: Tris-(diethylamino-methylen)-melamin, Tris-(dimethylamino-methylen)-melamin, das in der Folge MFD genannt wird, und Tris-(pyrrolidyl-methylen)-melamin.

Das vorzugsweise verwendete MFD ist wenig toxisch, seine LD 50 (Ratte, per os) beträgt 1.900 mg/kg, es ist weder haut- noch schleimhaut- oder augenreizend. Es bewirkt ferner keine Verfärbung der Vulkanisate.

Die der allgemeinen Formel (I) entsprechenden Verbindungen können allein eingesetzt werden. Vorzugsweise werden sie jedoch in Kombination mit konventionellen Vulkanisationsbeschleunigern verwendet.

Die Herstellung der genannten Verbindungen erfolgt analog zu dem Verfahren gemäß der US-PS 2 210 831 durch Vermischen von Melamin, Formaldehyd und Amin in Wasser, wobei gasförmige Komponenten eingeleitet werden können. Die Reaktionstemperatur beträgt 0-100°C.

Die Beschleuniger werden vorteilhaft in folgenden Mengen (phr, Gewichtsteile bezogen auf 100,0 Gew.-Teile Kautschuk) verwendet:

a) Melamin-Derivate der allgemeinen Formel I
etwa 0,05-5, vorzugsweise 0,1-2,0 phr

b) Thiazolbeschleuniger
etwa 0-5, vorzugsweise 0,3-2,0 phr

c) weitere konventionelle Beschleuniger
etwa 0-2, vorzugsweise 0,01-1,0 phr.

Als Thiazolbeschleuniger (b) seien beispielhaft genannt (siehe hierzu Verzeichnis der Abkürzungen in Tab. 1): MBT, MBTS, ZMBT, CBS, TBBS, MBS, DCBS.

Als weitere konventionelle Beschleuniger c) seien beispielhaft genannt: TMTD, TMTM, ZDEC, OTOS.

Die zur Vulkanisation verwendete Schwefelmenge beträgt im allgemeinen 0,2 bis 4 Gew.-Teile pro 100 Gew.-Teile Kautschuk.

Auch Schwefelspender, wie N,N'-Dithiobismorpholin, Dipentamethylenthiuramtetrasulfid, N,N'-Dithio-bis-hexahydro-2H-azepinon-(2), 2-Benzthiazyl-dithio-N-morpholid, können in den üblichen Mengen verwendet werden.

Die erfindungsgemäße Beschleuniger(kombination) eignet sich zur Vulkanisation von Dienkautschuken. Die Erfindung betrifft daher Dien-Kautschukmassen enthaltend neben den üblichen Mischungsbestandteilen die erfindungsgemäße Beschleuniger(kombination) sowie ein Verfahren zur Vulkanisation von Dienkautschuken unter Verwendung der erfindungsgemäßen Beschleuniger (kombination).

Als Dienkautschuke geeignet sind:
Styrol-Butadien-Kautschuk (SBR), Naturkautschuk (NR), Nitrilkautschuk (NBR), Polybutadien (BR), Polyisopren (IR), Polychloropren (CR).

Auch Mischungen aus verschiedenen Dien-Kautschuken können verwendet werden.

Die Einzelkomponenten des Beschleunigersystems können den Dien-Kautschuken bzw. Kautschuk-Mischungen vor dem Vulkanisieren entweder getrennt oder in Form eines Gemisches oder einer Kautschuk-Beschleuniger-Vormischung (vgl.: Ullmann's Enzykl.d.techn.Chemie, 3.Aufl.,Verlag: Urban & Schwarzenberg, München-Berlin 1957, Bd. 9, S. 364) zugesetzt werden.

Die Dien-Kautschuke können alle üblichen Zusätze wie Füllstoffe, insbesondere Ruße, Mineralöle, Weichmacher, Klebrigmacher, Beschleunigeraktivatoren, insbesondere Stearinsäure, Wachse, Alterungsschutzmittel, Ozonschutzmittel, Treibmittel, Farbstoffe, Pigmente, enthalten.

Füllstoffe, wie die in der kautschukverarbeitenden Industrie verwendeten Rußsorten, weiterhin Kieselsäure, insbesondere feinteilige, in der Gasphase gewonnene Kieselsäure sowie hydrophobische Kieselsäure und feinteilige Metalloxide, einschließlich Mischoxide und Oxid-Gemische, sind wertvolle Mischungsbestandteile.

Die Vulkanisation der Dien-Kautschuke wird im allgemeinen bei Temperaturen zwischen etwa 100°C und etwa 300°C, bevorzugt bei 140-240°C, durchgeführt. Hierfür können alle in der Technik üblichen Vulkanisationsverfahren wie Pressenheizung, Heizung mit Heißdampf, Heißluft, Salzbad, Fließbett, Ultrahochfrequenz und Dampfrohr, verwendet werden.

Die in den folgenden Beispielen angegebenen Daten wurden wie folgt gewonnen:

Mit den angegebenen Testrezepturen wurden in einem Innenmischer auf übliche Weise Kautschuk-Mischungen hergestellt. Schwefel und Vulkanisationsbeschleuniger wurden auf einem Walzwerk nachgemischt. Aus den

Mischungen wurden 4 mm starke Testklappen durch Preßvulkanisation angefertigt (Stufenheizung bei den in den Beispielen angegebenen Temperaturen). Die einzelnen Daten wurden durch die in Tabelle 1 angeführten Prüfmethoden erhalten. Auch die verwendeten Abkürzungen sind in Tabelle 1 zusammengestellt.

Beispiel 1

(phr = Gew.-Teile bezogen auf 100 Gew.-Teile Kautschuk)

| | phr |
|---|---|
| Naturkautschuk (smoked sheets) | 100,0 |
| Ruß N 330 (HAF) | 45,0 |
| Zinkoxid | 5,0 |
| Stearinsäure | 3,0 |
| aromatisches Mineralöl | 2,5 |
| naphthenisches Mineralöl | 2,5 |
| TMQ | 1,0 |
| IPPD | 1,5 |
| Schwefel | 2,35 |

| Vulkameter | HEXA 1,0 phr | MFD 1,0 phr |
|---|---|---|
| Anvulkanisationszeit | | |
| $t_s$(15) 120°C | über 30 | über 30 |
| $t_s$ (15) 130°C | über 30 | 21,3 |
| Fließzeit $t_s$(15)150°C | 5,9 | 4,9 |
| Ausvulkanisationszeit | | |
| $t_{90}$/150°C | 24,5 | 22,7 |
| Reaktionszeit | | |
| $t_{90}$-$t_s$/150°C | 18,6 | 17,8 |
| Ausvulkanisationszeit | | |
| $t_{90}$/180°C | 3,4 | 3,4 |

| | | | |
|---|---|---|---|
| Stufenheizung | | | |
| M 300 | 150°C/10 Min. | 3,3 | 4,1 |
| | 20 Min. | 4,9 | 6,5 |
| | 30 Min. | 6,2 | 7,7 |
| | 45 Min. | 7,4 | 9,0 |
| F | 150°C/30 Min. | 22,2 | 22,9 |
| D | 150°C/30 Min. | 605 | 605 |
| H | 150°C/30 Min. | 54 | 59 |
| E | 150°C/30 Min. | 49 | 51 |

Der erfindungsgemäße Beschleuniger MFD zeigt gegenüber dem als Vergleich dienenden HEXA folgende Vorteile: Kürzere Ausvulkanisationszeit $t_{90}$, kürzere Reaktionszeit $t_{90}$-$t_s$, höhere Spannungswerte $M_{300}$ und höhere Härte H. Auch die Elastizität E liegt geringfügig höher.

Beispiel 2 (Rezeptur wie in Beispiel 1 angegeben)

| | HEXA 0,5 phr<br>MBTS 0,5 phr | MFD 0,5 phr<br>MBTS 0,5 phr |
|---|---|---|
| Vulkameter | | |
| Anvulkanisationszeit | | |
| $t_s$(15) 120°C | 17,5 | 13,5 |
| $t_s$(15) 130°C | 9,2 | 7,1 |
| Fießzeit $t_s$(15)/150°C | 3,3 | 2,8 |
| Ausvulkanisationszeit | | |
| $t_{90}$/150°C | 13,5 | 10,2 |
| Reaktionszeit | | |
| $t_{90}$-$t_s$/150°C | 10,2 | 7,4 |
| Ausvulkanisationszeit | | |
| $t_{90}$/180°C | 2,7 | 2,4 |

| Stufenheizung | | | |
|---|---|---|---|
| M 300 | 150°C/10 Min. | 8,9 | 10,1 |
| | 20 Min. | 9,6 | 10,4 |
| | 30 Min. | 9,1 | 9,7 |
| | 45 Min. | 8,2 | 8,6 |
| F | 150°C/30 Min. | 24,5 | 23,7 |
| D | 150°C/30 Min. | 590 | 590 |
| H | 150°C/30 Min. | 60 | 64 |
| E | 150°C/30 Min. | 53 | 54 |

Der erfindungsgemäße Beschleuniger MFD zeigt in Kombination mit MBTS gegenüber der Vergleichskombination HEXA/MBTS folgende Vorteile:
Kürzere Ausvulkanisationszeit $t_{90}$, kürzere Reaktionszeit $t_{90}-t_s$, höhere Spannungswerte $M_{300}$ und höhere Härte H.

Beispiel 3 (Rezeptur wie in Beispiel 1 angegeben)

| | HEXA 0,5 phr<br>MBT 0,5 phr | MED 0,5 phr<br>MBT 0,5 phr |
|---|---|---|
| Vulkameter | | |
| Anvulkanisationszeit | | |
| $t_s$(15) 120°C | 12,8 | 9,7 |
| $t_s$(15) 130°C | 6,8 | 5,6 |
| Fließzeit $t_s$(15)/150°C | 2,4 | 2,2 |
| Ausvulkanisationszeit | | |
| $t_{90}$/150°C | 11,8 | 9,1 |
| Reaktionszeit $t_{90}-t_s$/150°C | 9,4 | 6,9 |
| Ausvulkanisationszeit | | |
| $t_{90}$/180°C | 2,5 | 2,3 |

Stufenheizung

| | | | |
|---|---|---|---|
| M 300 | 150°C/10 Min. | 8,6 | 10,6 |
| | 20 Min. | 9,1 | 10,1 |
| | 30 Min. | 9,1 | 9,9 |
| | 45 Min. | 8,6 | 9,4 |
| F | 150°C/30 Min. | 24,0 | 23,5 |
| D | 150°C/30 Min. | 575 | 535 |
| H | 150°C/30 Min. | 62 | 63 |
| E | 150°C/30 Min. | 52 | 54 |

Der erfindungsgemäße Beschleuniger MFD zeigt in Kombination mit MBT gegenüber der Vergleichskombination von HEXA/MBT die schon in Beispiel 1 und 2 angeführten Vorteile.

Beispiel 4

zeigt den Einfluß des erfindungsgemäßen Beschleunigers MFD auf die Farbe eines transparenten Vulkanisates, das aus folgenden Mischungsbestandteilen hergestellt wurde:

| | |
|---|---|
| Styrolbutadien-Kautschuk (SBR 1507) | 100,0 phr |
| Kieselsäure | 50,0 phr |
| Dicyclohexylamin (Füllstoffaktivator) | 1,0 phr |
| Naphthenisches Mineralöl | 5,0 phr |
| Stearinsäure | 2,0 phr |
| Phenolisches Alterungsschutzmittel[1)] | 1,0 phr |
| Zinkoxid | 1,8 phr |
| Schwefel | 1,8 phr |
| ZMBT | 1,2 phr |
| TMTD | 0,8 phr |

1) verwendet wurde Vulkanox(R) DS, Fa. Bayer Ag.

| | 1,0 phr HEXA | 1,0 phr MFD |
|---|---|---|
| Farbe des Vulkanisates nach Vulkanisation 150°C/30 Min. | braun | hell |

Es ist zu bemerken, daß DPG und DOTG erfahrungsgemäß noch stärker verfärben als HEXA.

Beispiel 5

gibt Ergebnisse in einer Mischung auf Basis von Styrol-butadien-Kautschuk/Polybutadien der folgenden Zusammensetzung wieder:

| | |
|---|---|
| SBR 1712 | 68,5 phr |
| Polybutadien[1)] | 68,5 phr |
| Ruß N 220 | 95,0 phr |
| Aromat. Mineralöl | 20,0 phr |
| Klebrigmachendes Harz[2)] | 2,0 phr |
| Stearinsäure | 2,0 phr |
| Ozonschutzwachs | 1,5 phr |
| IPPD | 1,5 phr |
| TMQ | 1,0 phr |
| Zinkoxid | 3,0 phr |
| Schwefel | 1,8 phr |
| MBTS | 1,0 phr |

- Verwendet wurden 1) Buna$^{(R)}$ CB 30, 2) Koresin

| | HEXA 0,50 phr | MFD 0,5 phr |
|---|---|---|
| Anvulkanisationszeit $t_s(15)/130°C$ | 12,5 | 10,0 |
| Fließzeit $t_s(15)/160°C$ | 1,8 | 1,8 |
| Ausvulkanisationszeit $t_{90}/160°C$ | 9,1 | 6,6 |
| Reaktionszeit $t_{90}-t_s/160°C$ | 7,3 | 4,8 |
| Spannungswert M 300 160°/ | | |
| 10 Min. | 4,6 | 5,7 |
| 20 Min. | 5,0 | 5,4 |
| 30 Min. | 4,8 | 5,3 |
| 45 Min. | 4,6 | 5,0 |
| Spannungswert M 300 180°C/ | | |
| 5 Min. | 4,5 | 5,1 |
| 10 Min. | 4,1 | 5,7 |
| 15 Min. | 3,9 | 4,5 |
| F 160°C/20 Min. | 13,7 | 12,1 |
| D 160°C/20 Min. | 600 | 525 |
| H 160°C/20 Min. | 62 | 62 |
| E 160°C/20 Min. | 25 | 25 |

Der erfindungsgemäße Beschleuniger MFD ergibt gegenüber dem als Vergleich dienenden HEXA folgende Vorteile: Kürzere Ausvulkanisationszeit $t_{90}$, kürzere Reaktionszeit $t_{90}-t_s$ und höhere Spannungswerte M 300.

Tabelle 1 Testmethodik

| | |
|---|---|
| Vulkameter | Bayer-Vulkameter, Aufheizung jeweils 1 min, Meßbereich 3/20 mV, Laufdauer bei 160°C/30 min, Vorschub 600 mm/h |
| $t_s$(15) | Anvulkanisationszeit aus Vulkametermessung bei 120°C bzw. 130°C, Zeit bis zum Anstieg der Schubmodulkurve um 15 bzw. 30 mm über das Minimum |
| $t_{90}$(min) | Ausheizzeit, Zeit bis zum Erreichen von 90 % des maximalen Schubmoduls (Bayer-Vulkameter) |
| $t_{90}$-$t_s$(min) | Reaktionszeit, Differenz zwischen Ausheizzeit $t_{90}$ und Anvulkanisationszeit $t_s$, gemessen bei derselben Temperatur (160°C) |
| Stufenheizung | 4 mm Klappen, Pressenheizung |
| $M_{300}$ (MPa) | Spannungswert bei 300 bzw. 500 % Dehnung, DIN 53504 |
| F (MPa) | Zerreißfestigkeit, DIN 53504, Normring R I |
| D (%) | Bruchdehnung, DIN 53504, Normring R I |
| H (Shore A) | Härte Shore A, DIN 53504, Normring R I |
| E (%) | Rückprallelastizität, DIN 53512, 4 mm Klappen |

Abkürzungen

| | | |
|---|---|---|
| MBT | = | 2-Mercaptobenzthiazol |
| MBTS | = | Dibenzthiazyldisulfid |
| HEXA | = | Hexamethylentetramin |
| MFD | = | Tris-(dimethylamino-methylen)-melamin |
| DPG | = | Diphenylguanidin |
| DOTG | = | Di-ortho-tolylguanidin |
| ZMBT | = | Zinksalz des 2-Mercaptobenzthiazols |
| CBS | = | 2-Benzthiazyl-cyclohexylsulfenamid |
| TBBS | = | 2-Benzthiazyl-tert-butyl-sulfenamid |
| MBS | = | 2-Benzthiazyl-sulfenmorpholid |
| DCBS | = | 2-Benzthiazyl-dicyclohexylsulfenamid |
| TMTD | = | Tetramethylthiuramdisulfid |
| TMTM | = | Tetramethylthiurammonosulfid |
| ZDEC | = | Zink-N-diethyldithiocarbamat |
| TMQ | = | polymerisiertes 2,2,4-Trimethyl-1,2-dihydrochinolin |
| IPPD | = | N-Phenyl-N'-isopropyl-p-phenylendiamin |
| OTOS | = | N-Oxydiethylen-dithiocarbamyl-N'-Oxydiethylensulfenamid |

Patentansprüche

1. Vulkanisationsbeschleuniger auf Basis von

a) Melaminderivaten der allgemeinen Formel I

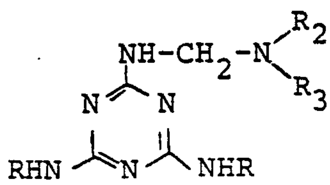

(I)

in der

R Wasserstoff oder den Rest 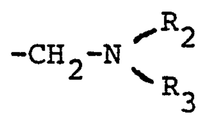

darstellt und

$R_2$ und $R_3$ gleich oder verschieden Wasserstoff, eine geradkettige oder verzweigte $C_1$-$C_4$ Alkyl- oder Alkenylgruppe, eine $C_3$-$C_7$, Cycloalkylgruppe bedeuten, wobei $R_2$ und $R_3$ auch miteinander über eine $C_2$-$C_{12}$, Alkylenbrücke miteinander verbunden sein können, in der sich auch ein Heteroatom wie Sauerstoff, Schwefel oder N-$C_1$-$C_4$-Alkyl befinden kann,

gegebenenfalls in Kombination mit

b) konventionellen Vulkanisationsbeschleunigern aus der Gruppe der Thiazolbeschleuniger und gegebenenfalls

c) weiteren konventionellen Beschleunigern.

2. Vulkanisationsbeschleuniger gemäß Anspruch 1 bestehend aus

a) 0,05-5 Gew.-Teilen eines Melaminderivates

b) 0-5 Gew.-Teilen eines Thiazolbeschleunigers

c) 0-2 Gew.-Teilen eines konventionellen Beschleunigers pro 100 Gew.-Teilen Kautschuk.

3. Vulkanisationsbeschleuniger gemäß Ansprüchen 1 und 2 bestehend aus

a) 0,1-2,0 Gew.-Teilen eines Melaminderivates

b) 0,3-2,0 Gew.-Teilen eines Thiazolbeschleunigers und

c) 0,01-1,0 Gew.-Teile eines konventionellen Beschleunigers pro 100 Gew.-Teile Kautschuk.

4. Dienkautschuk enthaltend neben üblichen Mischungsbestandteilen einen Vulkanisationsbeschleuniger gemäß Ansprüchen 1-3.

5. Verfahren zur Vulkanisation von Dienkautschuken unter Verwendung von Vulkanisationsbeschleunigern dadurch gekennzeichnet, daß man als Vulkanisationsbeschleuniger

a) Melaminderivate der allgemeinen Formel I in Anspruch 1 gegebenenfalls in Kombination mit

b) Thiazolbeschleunigern und gegebenenfalls

c) weiteren konventionellen Beschleunigern einsetzt und bei Temperaturen von 100-300°C vulkanisiert.

6. Verfahren gemäß Anspruch 5, dadurch gekennzeichnet, daß man als Vulkanisationsbeschleuniger

a) 0,05 bis 5 Gew.-Teile eines Melaminderivates der allgemeinen Formel I in Ansoruch 1,

b) 0-5 Gew.-Teile eines Thiazolbeschleunigers

c) 0-2 Gew.-Teile eines konventionellen Beschleunigers

pro 100 Gew.-Teile Dienkautschuk zusetzt.

7. Verfahren gemäß Ansprüchen 5 und 6, dadurch gekennzeichnet, daß man als Vulkanisationsbeschleuniger

a) 0,1-2,0 Gew.-Teile eines Melaminderivates der allgemeinen Formel I in Anspruch 1,

b) 0,3-2,0 Gew.-Teile eines Thiazolbeschleunigers und

c) 0,01-1,0 Gew.-Teile eines konventionellen Beschleunigers pro 100 Gew.-Teile Dienkautschuk zusetzt.

8. Verfahren nach Ansprüchen 5-7, dadurch gekennzeichnet, daß man als Melaminderivat Tris-(diethylamino-methylen)-melamin, Tris-(dimethylamino-methylen)-melamin und/oder Tris-(pyrrolidyl-methylen)-melamin verwendet.

9. Verfahren nach Ansprüchen 5-7, dadurch gekennzeichnet, daß als Komponente b) 2-Mercaptobenzthiazol, Dibenzthiazyldisulfid, Zinksalz des 2-Mercaptobenzthiazols, Benzthiazyl-2-cyclohexylsulfenamid, Benzthiazyl-2-tert-butylsulfenamid, Benzthiazyl-2- sulfenmorpholid und/oder Benzthiazyl-2-dicyclohexylsulfenamid und als Komponente c) Tetramethylthiurammonosulfid, Zink-N-diethyldithiocarbamat und/oder N-Oxydiethylen-dithiocarbamyl-N'-oxydiethylensulfenamid.

10. Kautschukvulkanisate erhalten nach einem Verfahren der Ansprüche 5-9.

0034764

Europäisches Patentamt

# EUROPÄISCHER RECHERCHENBERICHT

Nummer der Anmeldung
EP 81 10 0974

| Kategorie | EINSCHLÄGIGE DOKUMENTE<br>Kennzeichnung des Dokuments mit Angabe, soweit erforderlich, der maßgeblichen Teile | betrifft Anspruch | KLASSIFIKATION DER ANMELDUNG (Int Cl ) |
|---|---|---|---|
| A | US - A - 2 455 528 (R.B. SEYMOUR)<br>* Anspruch 1 *<br>-- | | C 08 L 21/00<br>C 08 K 5/34 |
| A | GB - A - 1 096 970 (AMERICAN CYANAMID COMP.)<br>* Anspruch 1; Seite 3, Zeilen 71-78 *<br>-- | | |
| A | GB - A - 1 339 749 (CIBA-GEIGY)<br>* Anspruch 1 *<br>-- | | RECHERCHIERTE SACHGEBIETE (Int Cl )<br>C 08 L 7/00-21/00<br>C 08 K 5/34<br>C 07 D 251/70<br>251/64 |
| A | GB - A - 1 159 505 (RUHRCHEMIE A.G.)<br>* Anspruch 1 *<br>& DE - A - 1 620 178<br>----- | | |

KATEGORIE DER GENANNTEN DOKUMENTE
X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 18-05-1981 | V. HUMBEECK |